# EUROPÄISCHE PATENTANMELDUNG

(11) **EP 0 608 573 A1**
(43) Veröffentlichungstag der Anmeldung: **03.08.1994**
(21) Anmeldenummer: 93121163.5
(22) Anmeldetag: 31.12.1993
(51) Int. Cl.: F21V 21/02, F21V 31/00

(54) **Leuchtengehäuse mit wassergeschützter Befestigung**

(30) Priorität: 23.01.1993 DE 9300898 U
(71) Anmelder: ZUMTOBEL LICHT GmbH, A-6851 Dornbirn/Vlbg. (AT)
(72) Erfinder: Ladstätter, Gerald, A-6850 Dornbirn (AT); Spiegel, Karl, A-6850 Dornbirn (AT); Spiegel, Michael, A-6850 Dornbirn (AT)
(74) Vertreter: Riebling, Peter, Dr.-Ing., Patentanwalt

(57) **Zusammenfassung**

Beschrieben wird ein Leuchtengehäuse (1) mit einem Gehäuseboden (25) zur wassergeschützten Befestigung an einer Decke oder Wand mit Hilfe von Schrauben (13), die unter Zwischenlage von Dichtelementen (18,20) durch Durchbrüche (12) im Gehäuseboden (25) in der Decke oder Wand geschraubt sind, wobei die Dichtelemente (18,20) an den Gehäuseboden (25) angeformt sind.

## Beschreibung

Gegenstand der vorliegenden Erfindung ist ein Leuchtengehäuse nach dem Oberbegriff des Patentanspruches 1.

Ein derartiges Leuchtengehäuse ist mit der auf den gleichen Anmelder zurückgehenden AT 383 662 B bekannt geworden. Bei diesem bekannten Leuchtengehäuse wird im deckennahen Bereich der Grundwanne in der Wandung der Grundwanne eine topfförmige Vertiefung definiert, in deren Mitte eine Durchsteckbohrung angeordnet ist. In diese topfförmige Vertiefung wird eine Schraube in Verbindung mit einer untergelegten gummielastischen Scheibe eingeschraubt, die sich an die Unterseite des Kopfes der Schraube abdichtend anlegen soll.

Die Verwendung einer gummielastischen Scheibe in Verbindung mit der Befestigungsschraube hat allerdings Nachteile. Bei der Herstellung entsteht ein höherer Aufwand und es ist nicht immer gewährleistet, daß sich die gummielastische Scheibe am Schaft der Befestigungsschraube abdichtend anlegt. Insbesondere über eine längere Lebensdauer hinweg gesehen kann das Gummimaterial verspröden und die Dichtheit der Verbindung ist dann nicht mehr gewährleistet.

Der Erfindung liegt deshalb die Aufgabe zugrunde, ein Leuchtengehäuse mit der eingangs erwähnten Deckenbefestigung so weiterzubilden, daß mit weniger Bauteilen und mit einfacherem Herstellungsaufwand eine bessere Dichtheit auch über eine längere Lebensdauer hinweg gesehen erreicht werden kann.

Zur Lösung der gestellten Aufgabe ist die Erfindung durch die Merkmale des Patentanspruches 1 gekennzeichnet.

Ein wesentliches Merkmal der Erfindung ist, daß die Durchsteckbohrung in der Wand der Grundwanne in einer topfförmigen Vertiefung angeordnet ist, und daß der umlaufende, innere Rand dieser topfförmigen Vertiefung als elastisch verformbare Dichtwulst ausgebildet ist, an den sich die Unterseite des Kopfes der Befestigungsschraube anlegt und diesen elastisch verformt, so daß sich dieser abdichtend an die Unterseite des Kopfes der Schraube anlegt.

Damit wird der wesentliche Vorteil erreicht, daß ohne weitere zusätzliche Hilfsmittel, wie eine gummielastische Scheibe oder eine in die gummielastische Scheibe eingesetzte Stahlscheibe (Vergleiche AT 383 662 B), eine absolute Dichtheit gewährleistet ist. Es werden keine zusätzlichen Teile benötigt, denn die zur Dichtwirkung erforderlichen Teile sind in der Grundwanne selbst integriert.

Hierbei ist es in einer ersten Ausführungsform der Erfindung vorgesehen, daß der elastische Dichtwulst aus dem Material der Grundwanne selbst gebildet ist. Das heißt, der Dichtwulst ist werkstoffeinstückig mit dem Material der Grundwanne ausgebildet, dies insbesondere dann, wenn die Grundwanne aus einem elastisch verformbaren Kunststoff, wie z. B. Polycarbonat oder Polypropylen besteht.

In einer anderen Ausgestaltung der Erfindung ist vorgesehen, daß der Dichtwulst nicht werkstoffeinstückig mit dem Material der Grundwanne ist, sondern das der Dichtwulst als Dichtring in das Material der Grundwanne eingelegt ist und ebenfalls elastisch verformbar ist.

Als ein weiteres wesentliches Merkmal der Erfindung ist vorgesehen, daß an der deckennahen Seite der Grundwanne ebenfalls ein verformbarer, ringsum laufender in sich geschlossener Kragen angeordnet ist, der unter Druck oder Preßeinwirkung sich ebenfalls zu einem nach außen gerichteten Ringwulst verformt, der sich abdichtend an die Decke anlegt.

Damit wird für die erfindungsgemäße Verbindung eine doppelte Dichtwirkung erzielt. Wasser, welches an der Decke entlang fließt, fließt zwar auf die Oberseite der Grundwanne an ihrer deckennahen Wandung, kann aber nicht den deckennahen Ringwulst überwinden und fließt daher um den in sich geschlossenen Ringwulst herum und gelangt demzufolge nicht in die Durchstecköffnung der Befestigung.

Sollte dennoch Wasser in diese Durchstecköffnung gelangen, dann trifft es auf die Abdichtfläche zwischen der Unterseite des Kopfes der Schraube und der zugeordneten umlaufenden Ringfläche des Dichtwulstes im Bereich der nach innen gerichteten Wand der Grundwanne.

Die erwähnte Befestigung hat im übrigen den Vorteil, daß man eine derartige Befestigung nicht nur mit Schrauben mit angeformten Kopf ausführen kann, sondern man kann auch Gewindebolzen verwenden, die vormontiert in der Decke befestigt sind, die dann durch die Durchsteckbohrung hindurchgeführt werden und die auf der Innenseite der Grundwanne mit einer entsprechenden Mutter versehen werden.

Ferner ist vorteilhaft, daß das gesamte Befestigungselement, welches ein Teil der deckennahen Wand der Grundwanne ist, zueinander parallele einen gegenseitigen Abstand ausbildende Auflagerippen aufweist, damit das gesamte Befestigungselement versteift wird, wobei wichtig ist, daß der zum Deckenbereich hinweisende Kragen, der bei der Befestigung den umlaufenden Ringwulst bildet, über die Höhe der Auflagerippen hinaussteht, so daß sich dieser Kragen bei der Anlage an die Decke verformen kann.

Es kommt hierbei zu einer plastischen Verformung des Kunststoffmaterials der Grundwanne.

Ferner ist wesentlich, daß im Umgebungsbereich des Befestigungselementes Längsrippen angeordnet sind, die sich über eine bestimmte Länge der Grundwanne erstrecken und das Befestigungselement in der Grundwanne von der Seite her abdecken, um so ein Eindringen von Spritzwasser von der Seite her in die Durchsteckbohrung zu vermeiden.

Der Erfindungsgegenstand der vorliegenden Erfindung ergibt sich nicht nur aus dem Gegenstand der einzelnen Schutzansprüche, sondern auch aus der Kombination der einzelnen Schutzansprüche untereinander.

Alle in den Unterlagen, ggf. einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere wesentliche Merkmale und Vorteile der Erfindung hervor.

Es zeigen:

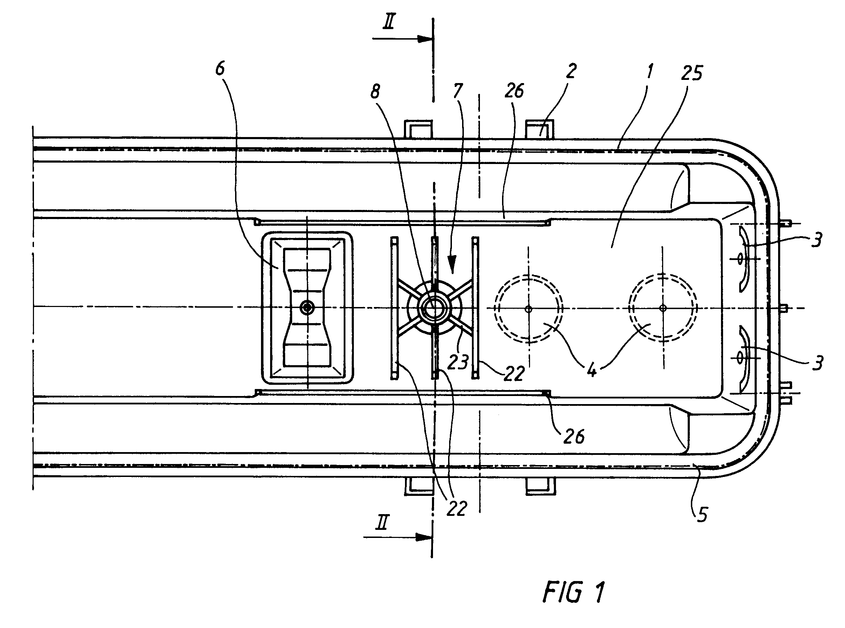

- Figur 1:: Draufsicht auf die deckenseitige Wandung einer Grundwanne einer Leuchte;
- Figur 2:: Schnitt entlang der Linie II-II in Figur 1.

Die Grundwanne 1 besteht in an sich bekannter Weise aus einem wannenförmigen Gehäuse, welches eine obere, deckenseitige Wand 25 definiert. Im Bereich der Wand sind voneinander beabstandet mehrere Befestigungselemente 7 angeordnet, von denen ein Befestigungselement 7 nachfolgend näher beschrieben wird.

Außerdem sind in der deckennahen Wand der Grundwanne 1 eine Reflektorbefestigung 6 angeordnet und Ausbruchöffnungen 4, für die Einführung eines Netzkabels.

An den Stirnseiten der Grundwanne 1 sind weitere Ausbruchöffnungen 3 vorgesehen, um dort ebenfalls ein oder mehrere Netzkabel hindurchzuführen.

Der umlaufende Rand der Grundwanne 1 ist als Dichtnut 5 ausgebildet und es sind im übrigen Verschlußlaschen 2 an den Seiten angeformt, um Verschlüsse zur Halterung einer Leuchtenabdeckung aufzunehmen.

Im Bereich jedes Befestigungselementes 7 ist eine Durchsteckbohrung 8 angeordnet, durch welche ein Bolzen 15 einer Schraube 13 greift, die in nicht näher dargestellter Weise in eine Decke oder Wand eingeschraubt ist.

Die Durchsteckbohrung 8 besteht aus verschiedenen Ausnehmungen. Eine erste, deckennahe Ausnehmung 10 weist einen relativ großen Radius auf, der über entsprechende Schrägen in eine Ausnehmung 11 kleineren Durchmessers übergeht, welche Ausnehmung etwa dem Durchmesser der Schraube entspricht.

Diese Ausnehmung 11 geht wiederum in eine weitere Ausnehmung 12 über, die mit schräg nach außen gerichteten Schrägen 16 eine Dichtfläche zu der Unterseite 17 des Kopfes 14 der Schraube 13 bildet.

Wichtig ist nun, daß die Ausnehmung 12 im Bereich einer topfförmigen Vertiefung 19 angeordnet ist, die ihrerseits von der Wand 25 der Grundwanne in Richtung zur Decke versenkt ist. Es bildet sich dadurch im Bereich der Vertiefung 19 eine umlaufende, hochstehende Dichwulst 18, die sich an die Unterseite 17 des Kopfes 14 anlegt.

Wird die Schraube 13 nun in die Deckenbefestigung eingeschraubt, dann verformt sich der Dichtwulst 18 teilweise plastisch und/oder teilweise elastisch, so daß es zu einer formschlüssigen Anlage an der Unterseite 17 der Schraube kommt. Es ergibt sich dadurch eine absolut zuverlässige Dichtfläche an der Unterseite des Kopfes 14 dieser Schraube.

Gleichzeitig wird die gesamte Grundwanne zur Decke hin gezogen, wobei wichtig ist, daß die Ränder der größeren Ausnehmung 10 vor den Auflagerippen 22 hervorstehen, so daß zunächst der umlaufende Kragen 20, welcher die Ausnehmung 10 definiert, zur Anlage an die Deckenfläche kommt. Durch weiteres Anziehen der Schraube 13 wird dann dieser Kragen 20 verformt und bildet einen plastischen Ringwulst 21, der um die gesamte Ausnehmung 10 herumläuft und die Ausnehmung gegen einlaufendes Wasser abdeckt. Diese Ringwulst 21 legt sich im übrigen ebenfalls abdichtend an der Deckenfläche an, um so auch ebenfalls eine gewiße Dichtwirkung zu erzielen.

Zur mechanischen Versteifung des Befestigungselementes sind mehrere parallele und einen gegenseitigen Abstand zueinander einnehmende Auflagerippen 22 vorgesehen, wobei eine mittlere Auflagerippe 22 die Durchsteckbohrung 8 schneidet. In diesem Bereich weist diese mittlere Auflagerippe 22 eine Ausnehmung 24 auf, um eine ringsum laufende Verformung des Kragens 20 zu gewährleisten.

Es sind ferner die Auflagerippen 22 verbindende, etwa strahlenförmig verlaufende Versteifungsrippen 23 vorhanden, die eine geringere Höhe aufweisen als die Auflagerippen 22.

Im Außenbereich der Grundwanne, jedoch im Bereich der Wand 25, sind seitliche Längsrippen 26 angeordnet, die etwa die gleiche Höhe aufweisen wie die Auflagerippen 22. Diese seitlichen, relativ hochgezogenen Längsrippen 26 schützen die Durchsteckbohrung 8 vor dem Eindringen von Spritzwasser, welches seitlich auf die Grundwanne 1 auftreffen könnte.

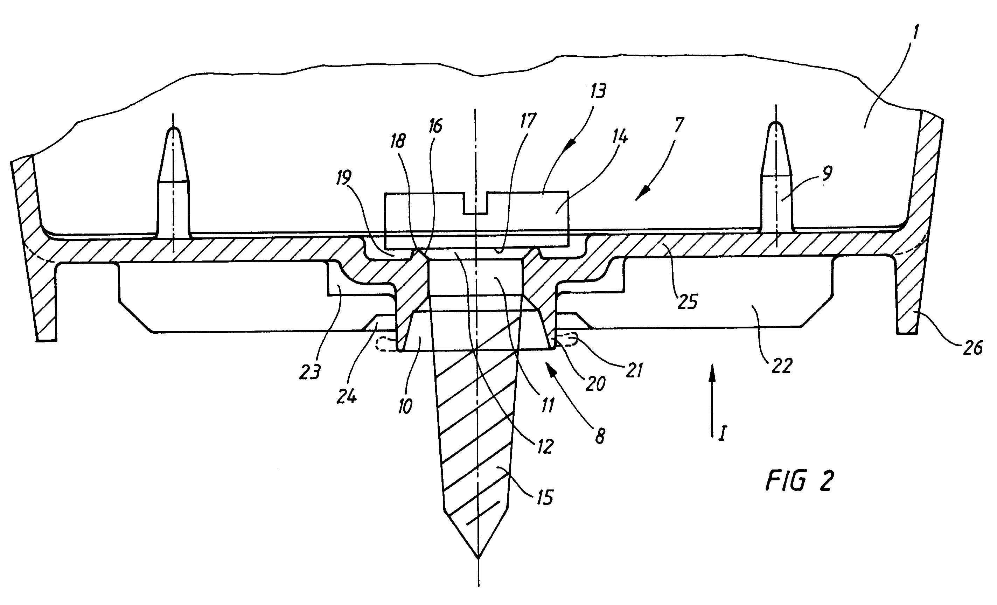

Im übrigen ist noch vorgesehen, daß die deckenseitige Befestigung nach der vorliegenden Erfindung von der Innenseite der Grundwanne her mit einer entsprechenden Haube abgedeckt werden kann. Diese Haube ist nicht dargestellt, sie wird aber auf die in Figur 2 dargestellten Reibzapfen 9 aufgesteckt und deckt die Schraube 13 von der Innenseite der Grundwanne her ab. Damit wird die Schraube 13 von dem Innenraum der Grundwanne her elektrisch isoliert.

Bei der vorliegenden Erfindung ist auch wesentlich, daß der Durchmesser der Ausnehmung 11 nicht unbedingt den Durchmesser des Bolzens 15 der Schraube angepaßt werden muß, denn in diesem Bereich ist eine Dichtwirkung nicht erforderlich. Es können auch Schrauben mit einem Bolzen 15 verwendet werden, der wesentlich kleiner ist und es kommt trotzdem noch zu der erwünschten Dichtwirkung. Damit besteht der Vorteil, daß man nicht Spezialschrauben für die Halterung der Grundwanne verwenden muß, sondern nur Schrauben, deren Kopf 13 einen größeren Durchmesser aufweist als der Durchmesser des Dichtwulstes 18.

| ZEICHNUNGS-LEGENDE | | | |
|---|---|---|---|
| 1 | Grundwanne | 26 | Längsrippe |
| 2 | Verschlußlasche | | |
| 3 | Ausbruchöffnung | | |
| 4 | Ausbruchöffnung | | |
| 5 | Dichtnut | | |
| 6 | Reflektorbefestigung | | |
| 7 | Befestigungselement | | |
| 8 | Durchsteckbohrung | | |
| 9 | Reinzapfen | | |
| 10 | Ausnehmung | | |
| 11 | Ausnehmung | | |
| 12 | Ausnehmung | | |
| 13 | Schraube | | |
| 14 | Kopf | | |
| 15 | Bolzen | | |
| 16 | Schräge | | |
| 17 | Unterseite | | |
| 18 | Dichtwulst | | |
| 19 | Vertiefung (topfartig) | | |
| 20 | Kragen | | |
| 21 | Ringwulst | | |
| 22 | Auflagerippe | | |
| 23 | Versteifungsrippe | | |
| 24 | Ausnehmung | | |
| 25 | Wand | | |

## Patentansprüche

1. Leuchtengehäuse mit einem Gehäuseboden zur wassergeschützten Befestigung an einer Decke oder Wand mit Hilfe von Schrauben, die unter Zwischenlage von Dichtelementen durch Durchbrüche im Gehäuseboden in der Decke oder Wand geschraubt sind, **dadurch gekennzeichnet**, daß die Dichtelemente (18,20) an den Gehäuseboden (25) angeformt sind.

2. Leuchtengehäuse nach Anspruch 1, **dadurch gekennzeichnet**, daß die Dichtelemente als Kragen (18,20) ausgebildet sind, die an die Innenseite und/oder Außenseite des Durchbruches (12) angeformt sind.

3. Leuchtengehäuse nach Anspruch 2, **dadurch gekennzeichnet**, daß seitlich des Durchbruches (12) nach außen weisende Längsrippen und/oder Auflagerippen (22,26) vorgesehen sind

4. Leuchtengehäuse nach Anspruch 3, **dadurch gekennzeichnet**, daß die Längsrippen (26) und/oder die Auflagerippen (22) niedriger sind als der an der Außenseite des Durchbruches (12) vorgesehene Kragen (20).

5. Leuchtengehäuse nach einem der Ansprüche 1 bis 4, **dadurch gekennzeichnet**, daß radial zu dem Durchbruch (12) Versteifungsrippen (23) vorgesehen sind.

6. Leuchtengehäuse nach einem der Ansprüche 1 bis 5, **dadurch gekennzeichnet**, daß der Durchbruch (12) randseitsig eine von innen nach außen weisende Schräge (16) aufweist, an die sich einwärts ein enger Querschnitt (11) des Durchbruches (12) anschließt, der sich über eine Schräge nach außen zu dem Kragen (20) verbreitert.
